# EUROPEAN PATENT APPLICATION

(11) **EP 4 242 736 A1**
(43) Date of publication of application: **13.09.2023**
(21) Application number: 22305282.0
(22) Date of filing: 11.03.2022
(51) Int. Cl.: G02C 7/10, G02F 1/163, G06F 3/01, G02F 1/15, G02B 27/01

(54) **SYSTEM COMPRISING AN OPTICAL DEVICE AND A CONTROLLER**

(71) Applicant: Essilor International, 94220 Charenton-Le-Pont (FR)
(72) Inventor: LE CAIN, Aurélie, 94000 CRETEIL (FR); BERNARDIN TRANVOUEZ, Delphine, 94000 CRETEIL (FR); HAMON, Clément, 94000 CRETEIL (FR); VINCENS, Valérie, 94000 CRETEIL (FR)
(74) Representative: Korakis-Ménager, Sophie

(57) **Abstract**

System and a method for controlling a module of an optical device intended to be used by a user. The system comprises an optical device and a controller, the optical device is intended to be used by a user, and comprises a first sensor, a second sensor and a module. The controller is configured to determine a situation of the user, using a model and first data received from the first sensor and to determine a confidence level associated with the situation. When the confidence level is below a threshold the controller is also configured to activate the second sensor and to update the situation using second data received from the second sensor. The controller is also configured to control the module according to the situation.

## Description

### FIELD

Various aspects of this disclosure generally relate to the field of the control of an optical device according to the situation of the user wearing the optical device.

### BACKGROUND

Optical devices can comprise different functions using different modules, for example, e-chromic or e-focus lenses or emergency calling modules.

The configuration, for example, the activation of these modules depends on the situation of the user wearing the optical device. The user wearing the optical device is also known as the wearer of the optical device.

To determine the situation different sensors can be used. Among them, some sensors provide more reliable information but at the cost of higher power or energy consumption, for example cameras. The cameras also can lead to data privacy issues. Some other sensors, such as the inertial measurement units (IMU), use less power or energy but at the cost of less reliable information.

We know the product Clouclip that uses a time of flight (TOF) sensor to determine the distance between a user and an object read by the user. However, this determination is not always accurate and could lead to false alerts of too close proximity.

We know devices comprising E-Chromic lenses using ambient light sensors. But the detection of the luminosity is not always accurate and could lead to incorrect darkening of the lenses.

We know devices using a satellite-based localisation module, for example implementing Global Positioning System GPS or Galileo specifications to determine the location of the user. However, the accuracy of this location is not always perfect especially in indoor situations or in cities.

There is a need for a system, allowing a limited electrical consumption while providing accurate detection of a situation, comprising an optical device and a controller that could determine a situation and adapt or configure a module of the optical device to this situation.

### SUMMARY

The following presents a simplified summary in order to provide a basic understanding of various aspects of this disclosure. This summary is not an extensive overview of all contemplated aspects and is intended to neither identify key or critical elements of all aspects nor delineate the scope of any or all aspects. The sole purpose is to present some concepts of one or more aspects in a simplified form as a prelude to the more detailed description that is presented later.

One aspect of this disclosure is a system. This system comprises an optical device and a controller, the optical device is intended to be used by a user, and comprises a first sensor, a second sensor and a module. The controller is configured to determine a situation of the user, using a model and first data received from the first sensor and to determine a confidence level associated with the situation. When the confidence level is below a threshold the controller is also configured to activate the second sensor and to update the situation using second data received from the second sensor. The controller is also configured to control the module according to the situation.

This system allows the activation of the second sensor (for example a camera) to extract information from the environment and complete/correct the data collected by the first sensor.

These informations could be used for example to:
- Pilot a Smart Glasses or alert a wearer based on this activity or situation confirmation
- Calibrate a sensor
- Create wearer visual active live/ergonomic/UXperience profile

Another aspect of this disclosure is an eyewear intended to be worn by a user. The eyewear comprises a controller, a first sensor, a second sensor and a module. The controller is configured to determine a situation of the user, using a model and first data received from the first sensor and to determine a confidence level associated with the situation. When the confidence level is below a threshold the controller is also configured to activate the second sensor and to update the situation using second data received from the second sensor. The controller is also configured to control the module according to the situation.

Another aspect of this disclosure is a method controlling a module of an optical device intended to be used by a user. The method comprises a step of determining a situation of the user, using a model and first data received from a first sensor of the optical device, a step of determining a confidence level associated with the situation. When the confidence level is below a threshold the method also comprises a step of activating a second sensor of the optical device, a step of updating the situation using second data received from the second sensor. The method also comprises a step of controlling the module according to the situation.

### DESCRIPTION OF THE DRAWINGS

For a more complete understanding of the description provided herein and the advantages thereof, reference is now made to the brief descriptions below, taken in connection with the accompanying drawings and detailed description, wherein like reference numerals represent like parts.
Figure 1 represents a system.
Figure 2 represents an optical device.
Figure 3 represents a first embodiment of the method for controlling a module of an optical device.
Figure 4 represents a second embodiment of the method for controlling a module of an optical device.

### DETAILED DESCRIPTION OF EMBODIMENTS

The detailed description set forth below in connection with the appended drawings is intended as a description of various possible embodiments and is not intended to represent the only embodiments in which the concepts described herein may be practiced. The detailed description includes specific details for the purpose of providing a thorough understanding of various concepts. However, it will be apparent to those skilled in the art that these concepts may be practiced without these specific details. In some instances, well-known structures and components are shown in block diagram form in order to avoid obscuring such concepts.

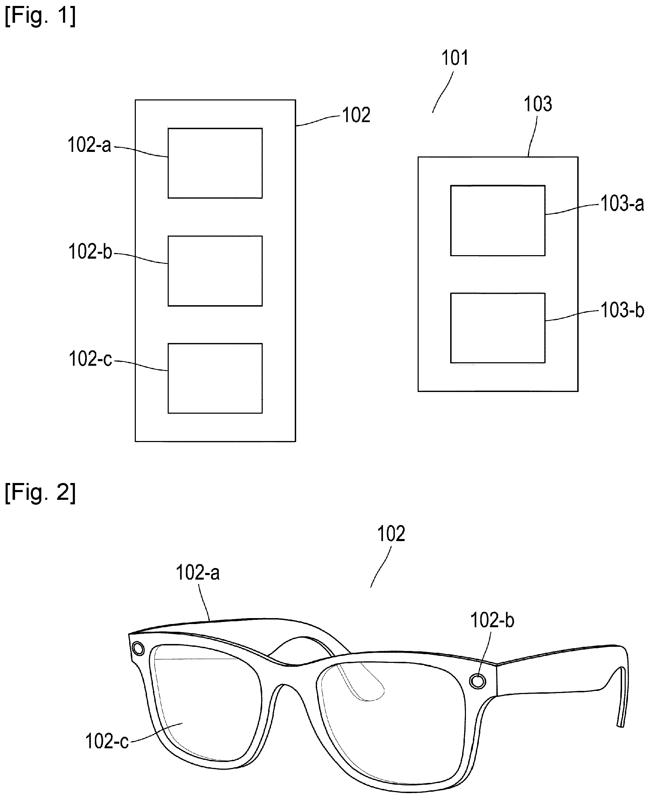

Figure 1 represents a system 101 comprising an optical device 102 and a controller 103.

The optical device 102 can be for example an eyewear or eyeglasses.

The optical device 102 comprises a first sensor 102-a, a second sensor 102-b and a module 102-c. The optical device 102 is intended to be worn by a user.

The first sensor 102-a can have a power consumption inferior to a power consumption of the second sensor 102-b.

The controller 103 is also known as "controller module". The controller 103 comprises a memory 103-a and a processor 103-b. The controller 103 is for example a calculation module, a computer, a mobile device like a smartphone. The controller 103 can also be a virtual machine located on a cloud network or a server not co-located with the subject. The controller 103 can also be integrated into the optical device 102.

Examples of processors 103-b include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure.

The memory 103-a is computer-readable media. By way of example, and not limitation, such computer-readable media may include a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by the controller 103.

The first sensor 102-a can be:
- a sensor to determine an acceleration, for example, a Inertial Measurement Unit (IMU),
- a sensor to determine an amount of a portion of light received by the optical device, for example, an Ambient Light Sensor ALS, an ultraviolet sensor or a spectrometer,
- a sensor to determine a location, for example a satellite-based localisation sensor for example implementing Global Positioning System GPS or Galileo specifications or
- a sensor to determine a distance between the user and an object that the user is reading.

The inertial measurement unit will provide an indication of head posture. We can use the model to predict a situation that can be a far vision situation (for which we don't need to have specific action) or a situation such as working on a computer/desktop, or a situation such as reading on a smartphone.

The second sensor 102-b can be:
- a sensor to capture a picture, for example, a camera or
- a sensor to detect a gaze axis of the user, for example, an eye tracker.

The sensor to detect a gaze axis can also detect a gaze direction, point and/or distance.

Using the eye tracker as the second sensor allows the improvement of data quality received from the first sensor by completing and comparing data received from non-distant /non-allocentric data with distant-allocentric data.

Using the camera as the second sensor allows the improvement of data quality received from the first sensor by completing and comparing data received from non-visible data with visible data.

When the second sensor is a camera, the system 101 or the method, presented below, of this disclosure allows better compliance with obligations related to personal data protection, for example with the European Union regulation reference 2016/679 General Data Protection Regulation GDPR.

The second sensor 102-b can comprise at least two cameras. The advantage of activating two cameras is to improve the accuracy of 3D metrics such as distance estimation and orientation of the user related to a point/surface of the environment, without motion image processing as it is requested by the use of only one camera.

In an embodiment, the second sensor 102-b is an human-machine interface comprising for example a screen and keys, that allows the user to confirm the situation. In other words, this human-machine interface could allow the system 101 to complete and cross-check subjective data obtained from the first sensor 102-a, by a questionnaire according to the received data.

The module 102-c can be:
- a variable-tint lens,
- a variable-power lens,
- a communication module configured to transmit information representing the situation,
- a light-emitting device or
- a tactile actuator.

A variable-tint lens is also known as an electrochromic lens or e-chromic lens. A variable-tint lens is a lens where the colour, tint or opacity of the lens changes when a voltage is applied to it. By doing so, an electrochromic lens can block ultraviolet, visible or (near) infrared light instantaneously and on-demand and according to the parameters received from the controller 103.

A variable-power lens or electro power lens (also known as variable-focus lens or electro focus lens) is a lens on which the power of the lens can be adapted according to parameters received from the controller 103.

In an embodiment the module 102-c is controlled also using physiological parameters of the user or preferences of the user. For example the color, the tint, the opacity, the focus or the power of the lens is adapted to physiological parameters of the user or to preferences of the user.

For example when a reading situation is confirmed and at the same time an outdoor situation the tint of the variable-tint lens is adjusted based on wearer preferences. For example the controller 103 can be configured to use a table comprising for each activity a value of the tint or a range of tints to use.

By physiological parameters of the user we mean for example:
- Socio-demographic: age, gender
- Optometric profile: Rx, Rx Sensitivity, Visual Acuity, Stereoscopic, Light sensitivity,...
- Oculomotor profile: Visual fixation capacity, saccades, VOR, pursuit capacity,...
- Visual perception: disparity, motion, optic flow, depth perception capacity,...
- Emotional state: happy, sad,stress, anxiety...
- Cognitive state: workload level
- Physiological states: hormonal level such as adrenaline rate....

By preferences of the user we mean choice done by the user in certains contexts, tasks, environment and physiological, cognitive, emotional state.

The light-emitting device can be for example a light-emitting diode.

The tactile actuator is also known as haptic actuator, kinaesthetic communication or 3D touch. This actuator uses technology that can create an experience of touch by applying forces, vibrations, or motions to the user. When the optical device 102 is an eyewear, this actuator can be located in the internal face of the eyewear for example along an arm of a frame of the eyewear and configured to touch the face of the user.

Figure 2 represents an eyewear or eyeglasses 102 comprising an Inertial Measurement Unit 102-a, a camera 102-b and electrochromic lenses 102-c.

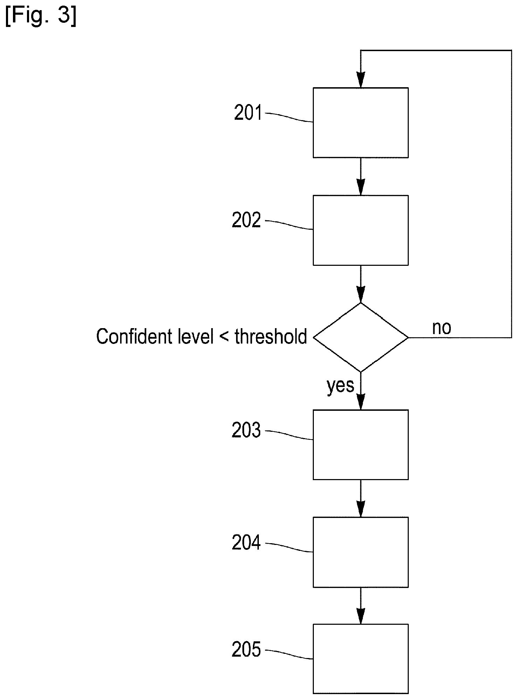

The memory 103-a is configured to store a computer program comprising instructions which, when the program is executed by the processor 103-b, cause the controller 103 to carry out a method for controlling the optical device 102 more precisely the module 102-c of the optical device 102. The method can be a computer-implemented method. This method is represented in figure 3 and comprises:
- a step of determining 201 a situation of the user, using a model and first data received from the first sensor 102-a,
- a step of determining 202 a confidence level associated with the situation,
when the confidence level is below a threshold the method also comprising:
- a step of activating 203 the second sensor 102-b,
- a step of updating 204 the situation using second data received from the second sensor 102-b,
the method also comprising:
- a step of controlling 205 the module according to the situation.

The model can be a machine learning model for example a Convolutional Neural Network CNN.

When the power consumption of the first sensor 102-a is inferior to the power consumption of the second sensor 102-b, the above presented method allows a reduction of a power consumption of the optical device 102.

The threshold can depend on the power consumption of the first sensor 102-a, the power consumption of the second sensor 102-b and/or a ratio between the power consumption of the first sensor 102-a and the power consumption of the second sensor 102-b.

The duration of activation of the second sensor 102-b will depend upon the model used for example the complexity of solving confusion data, but also the situation of the user, and the parameters of the module that needs to be activated or configured.

This activation will help to confirm some situations like reading content on a book or a smartphone. This is important as the support used by the user to read (book or smartphone) doesn't drive the same visual demands. For example, the size of the visual support can influence how a user will use its lenses or visual capacity.

The step of determining 201 a situation of the user is followed by the step of updating 204 the situation. We can use these sensors in combination with neural networks or other classification methods in order to extract from the sensor measurement pattern the situation encountered by the user. From the camera, using CNN (Convolutional Neural Network) for instance on images, we can update the situation (situation = environment, activity, social interaction). The environment is for example indoor, outdoor, in office, at home, in cinema, in restaurants, in the subway, in tennis court, in a car, a bus or other means of transportation, in the street. Activities can be working, reading, gaming, sporting (soccer, tennis..), gardening, going shopping, driving. Social interaction can be talking with someone (face to face / by phone), being in a crowd, being alone, taking a picture. The physiological state can be visually focused (in a car as a driver) or not (in a car as a passenger), stress level, emotional status, arousal level.

We can decide, when the confidence level is low, to switch on the camera and to confirm from the image taken if the proposed situation is correct. If not, we can modify the model to improve the confidence level, by using the camera that will provide the right situation despite the wrong model answer. Using this, the confidence level will increase during the next determinations of the situation and therefore the need to activate the second sensor 102-b will decrease.

In an embodiment, the model used in the method of figure 2 is a learning model previously generated using a plurality of sets of training data, each set being associated with a situation of the user.

In an embodiment the step of determining 201 the situation is configured to determine:
- that the user is indoor,
- that the user is outdoor,
- that the user is driving,
- that the user has an emergency, for example, because the user has fallen,
- that the user is reading.

This step of determining 201 the situation can also be configured, when the user is reading, to determine the type of an apparatus the user is reading on or a distance between the user and an element/apparatus the user is looking at.

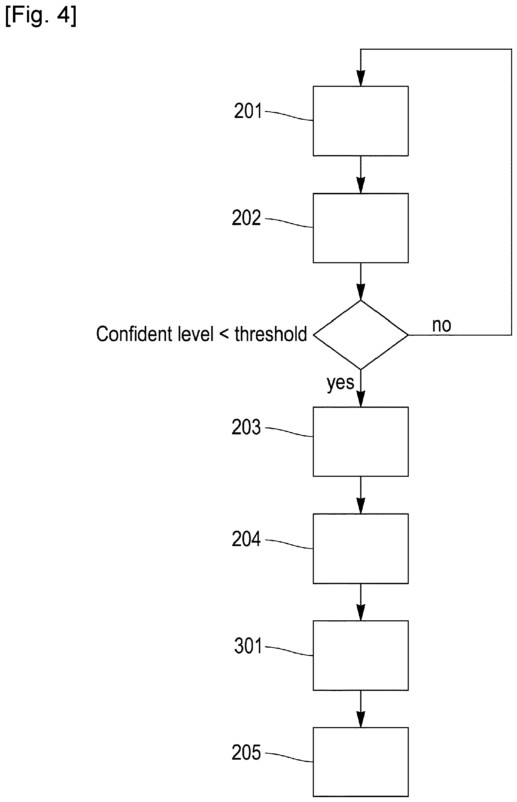

In an embodiment, presented figure 4, when the confidence level is below a threshold, the method of the figure 3 also comprises a step of updating 301 the model using the second data.

In other words, the activation of the camera (second sensor 102-b) could also be a way to improve further detection based on the first sensor 102-a only using the model. To realize this the data received from the camera are labeled, to indicate the situation indoor/outdoor detection or reading distance alert, but also biological data of the user etc.

These new labeled data can be integrated in the first data. In other embodiments, the model used to determine the situation will be updated by confirming the situation based on the confirmation of the situation by the second sensor 102-b. For example, a value true/false based on camera activation will confirm or not the situation obtained using the data of the first sensor 102-a.

In an embodiment the step of determining 201 a situation, the step of updating 204 the situation or the step of updating 301 the model can be based on data coming from an external device, for example, weather data coming from a smartphone.

In other words, the system 101 of this divulgation can detect a situation, an activity, an environment or a visual behaviour based on the sensors of the optical device 102 other than the camera. If the confidence level in the determination of the situation, the activity, the environment or the visual behaviour is below a threshold, the camera of the optical device 102 is activated to capture images (for example photos or videos) of the environment surrounding the optical device 102. Using these captured images, the system 101 can confirm or not the situation, the activity or the environment or visual behaviour and can the controller can control/configure and/or activate the module 102-c to:
- Activate an alert if confirmation
- Pilot smart glasses, for example, electronic lenses

The module 102-c of the optical device 102 can be controlled to adapt to different situations. For different situations, we need different visual parameters to optimize the user vision/wellbeing/performance/interaction with others. In this case, the parameters of the e-chromic lenses will be adapted to the configuration. For each of the possible situations detected, we associate to it the most relevant vision parameter to be maintained/preserved/improved and the light/filter characteristics associated. We can use a database linking situations and relevant visual parameters. Furthermore, these characteristics can be customized according to the user, for example using an application available on a smartphone. For instance, for a user having high sensitivity to chronobiological blue, it is possible for each situation for which we need to reduce blue light to apply higher filtering.

In an embodiment, the system 101 can evaluate other specific information on the picture (like the nature of the device/ its dimension in case of proximity alert).

The system 101 can also, during the acquisition by the second sensor 102-b, continue the acquisition of data from the first sensor 102-a to improve the model.

When the second sensor 102-b is an eye tracker, the system 101 can be configured to confirm that the user is using his near vision, for example, to read on a book or portable device.

The system 101 and the method of this disclosure can be used in different use cases.

In a first use case, the Inertial Measurement Unit allows the determination of the head angle posture of the user. However, the same horizontal head angle posture can indicate that the user looks in a primary gaze direction but it can drive ambiguity on the gazing distances (Far or near distance) as we don't know the environment. However the information provided by the IMU is not accurate enough to obtain the visual behaviour of the user expressed by a vision distance dedicated to viewing at a screen or at the environment viewing. In this case, activating the camera, when the confidence level is below the threshold, will allow the disambiguation of the distance of viewing. To realize this the model will allow association of the head movements from the Inertial Measurement Unit and a vision's distance confirmation using the camera.

In a second use case, the same tilted head posture (30°) can indicate that the individuals look at a smartphone or a tablet or a curb while walking. Inertial Measurement Unit's data can support the classification of motor activities (walking vs. standing) but does not provide information accurate enough to realize the classification of visual activities related to the environment and/or the device used by the user. For example, if individuals look at their smartphone while walking, in this case, the camera will help to classify the activities. In other embodiment to improve calibration: an image processing of punctual snapshot can give us relevant cues such as the orientation of the IMU with respect to the vertical and horizontal of the world (spatial frequency of the image) ; as the accuracy of signal in time of IMU data with respect to structure from the motion of the world image (depth speed/orientation of motion direction). In the same way, the ergo visual evaluation: gaze stability activity and distance of viewing can be predicted from head motion, the use of a visible image can support the detection if individuals are fixating an object at distance or fixating a location in space. The same head-eye orientation can be used to look in one direction / the distance of fixation can be detected from head patterns obtained by the IMU and confirmed using the camera.

In a third use case, the head angle detected from the IMU can reveal that individuals are working on a laptop or on a screen office. The camera will help to define by object recognition the context of visual behaviour usage, for example the environment and/or the device used by the user screen, tablet, laptop, etc.

Regarding the module 102-c in a first use case, the determination of an indoor-outdoor situation allows the configuration of an e-chromic lens. Using only the Ambient Light Sensor (ALS) to detect luminosity and pilot the activation or deactivation of the tint of the lens, will in some cases result in the e-chromic lens turning dark in situations where it is not needed, for example, if the user walks near a window. In this case, the camera (the second sensor 102-b) could confirm if the e-chromic lenses need to turn dark or not..

In a second use case, the system 101 will use the camera to confirm that a user fell (for example an older person), after the detection by the IMU that the user fell. Once this situation is confirmed the communication module can be controlled to transmit a warning signal.

In a third use case, the system 101 can be used to detect a reading distance of the user and to control a light-emitting device or a tactile actuator 102-c to alert the user of an incorrect reading distance. In this use case, the camera 102-b can be used to confirm the reading distance. In other words, data ambiguity is one of the issues of this third use case, as the proximity can be monitored at each proximity of the sensor to any surface; independently of the visual proximity activity of the wearer such as reading a text, gazing on support. Moreover, for the same proximity different vision distances can exist, for example, the user is looking at a smartphone with a gaze declination of 40° can look at either the smartphone or the ground. The detection of the smartphone proximity can create a false positive if the wearer is indeed fixing the ground and not the smartphone. A combination with data received from the second sensor 102-b (for example a camera) can lever a part of this ambiguity. For that, an image processing of the images received from the camera will allow system 101 to determine that the user is gazing at the smartphone by fusing. An alert will indicate if there are false or true proximity events
- in case of an alert confirm or not reading activity to avoid false positive
- in case of an alert confirm or not confirm gazing on an object
- in case of an alert confirm or not confirm a quiet eye state

The system 101 and the method described above allow the adaptation of the optical device to social interaction, by providing appropriate e-Chromic parameters according to social interaction parameter continuously from two extreme, all intermediate states:
- According to the light level, the darkness of the filter is adjusted to not be able to see the user's eyesight (for example, when resting in a train or in a part, "incognito mode" walking on the street).
- According to the light level, the darkness of the filter is adjusted to be able to see the user's eyesight (for example, when discussing outside in the sun with someone you know).
- In some conditions, whatever the light level, filters are in clear mode (for example, to fit with social interaction rules such inside a building or during business meetings or in countries where dark lenses are perceived as inappropriate as in Asia).

The system 101 and the method described above also allow the adaptation of the optical device to the spectral environment. According to the spectrometer/light sensors measurements and/or situation is known, e-Chromic parameters (especially intensity and spectrum are adjusted to maintain good vision (acuity, contrast sensitivity, colour contrast sensitivity, movement detection, colour rendering...). These parameters can generic or personalised. Some examples:
- While walking in tropical forests or deserts, spectrometer data would allow colour and tint adjustment for the optimum colour rendering of the environment.
- While cycling or skiing, spectrometer data would detect any fog and would set a blue cut filter (yellow) to improve low contrast detection. While playing tennis, the lens spectrum would be adjusted according to ground colour
- For persons with visual colour deficiency, filter spectrum be adjusted according to main colours from spectrometer data in order to improve colour detection in the considered environment.
- According to the blue level of the light and hour of the day, the spectrum would be adjusted to protect the eye from damaging light levels or to not disturb the chronobiology system.

The system 101 or the method can have a default mode or be personalised through a human-machine interface. The default mode uses the action/situation of the user and governs the filters and transmission of the connected glasses. This mode could also use emotion during the conversation to adjust the tint. This option could be deactivated. This mode could also be improved by a continuous learning method (taking into account manual adjustment from the user). We could imagine that the mode could be activated only after a few seconds (to be defined by the user) of interaction - or depending on the nature of the conversation (tone or words). The personalized mode in which the user decides on pre-settings in the optical device 102, for example when the optical device 102 is an eyewear, in a frame of the eyewear. The pre-settings could be linked to the user or specific needs depending on a situation (needs for environment or activities). The pre-settings also can consist of the finest settings of the different colour filters: transmission of a colour/transmission tint can be adjusted at a real percentage depending on the chronotype, the circadian rhythm, sensibility, visual parameters and preferences of the user.

During social interactions (for example when having a conversation), the user could classify it in a category the person with which the user has an interaction (close friend, unknown, collaborators) or a situation where he has specific needs (place where it could change or not using), the frame changes filters and light transmission level according to the parameters that the user has assigned to this category. Depending on personal preferences, light tints (class 1 and/or 2) are sometimes unwanted but sometimes appreciated and can be set in the personalized mode.

In some specific situations, the goal is to improve the comfort and the quality of the user's vision. We could also have a change of colours in filters in order to stimulate/modulate emotions and sensations of the user such as a blue filter to focus his attention.

In case of an emergency situation, this mode can be deactivated (if the action is specified in the pre-settings) by an eye movement or a head movement:
- a specific mode that can be activated or deactivated manually by the user and/or voice command (voice control) or automatically by detecting a user's movement or an activity/environment.

We can also have a "do not disturb" situation (mode) accessible from the smartphone, which darkens and does not change anymore - except for exceptions defined by the user (arrived at home) or another mode related to a state of mind targeted by the user (rest, concentration). Because of visual adaptation, the user might not remember what mode is active for a specific/new situation (that happens with photochromic lenses for instance), which might lead to a "not desired" mode for the user. To avoid this the active mode can be recalled by the user (gesture or command) on the application to be aware of which mode is turned on and decide another specific mode.

## Claims

1. System (101) comprising an optical device (102) and a controller (103),
the optical device (102) being intended to be worn by a user, and comprising
- a first sensor (102-a),
- a second sensor (102-b),
- a module (102-c),
the controller (103) being configured:
- to determine a situation of the user, using a model and first data received from the first sensor (102-a) and
- to determine a confidence level associated with the situation,
when the confidence level is below a threshold the controller being (103) also configured:
- to activate the second sensor (102-b) and
- to update the situation using second data received from the second sensor (102-b),
the controller being also configured:
- to control the module (102-c) according to the situation.

2. The system (101) according to the claim 1, the model being a learning model previously generated using a plurality of sets of training data, each set being associated with a situation of the user.

3. The system (101) according to the claim 1 or 2, the first sensor (102-a) being:
- a sensor to determine an acceleration, for example a inertial measurement unit,
- a sensor to determine an amount of a portion of light received by the optical device (102), for example an ambient light sensor or an ultraviolet sensor, or
- a sensor to determine a distance between the user and an object that the user is reading.

4. The system (101) according to any of the claims 1 to 3 the second sensor (102-b) being:
- a sensor to capture a picture, for example a camera or
- a sensor to detect a gaze axis of the user, for example an eye tracker.

5. The system (101) according to any of the claims 1 to 4, the module (102-c) being:
- a variable-tint lens,
- a variable-power lens,
- a communication module configured to transmit information representing the situation,
- a light emitting device or
- a tactile actuator.

6. The system (101) according to any of the claims 1 to 5, the controller (103) being configured to determine:
- that the user is indoor,
- that the user is outdoor,
- that the user is driving,
- that the user has fallen,
- that the user is reading,
- a type of an apparatus the user is reading on or
- a distance between the user and an element the user is looking at.

7. The system (101) according to any of the claims 1 to 6, when the confidence level is below the threshold the controller (103) is also configured to update the model using the second data.

8. The system (101) according to any of the claims 1 to 7, the optical device (102) being an eyewear (EY).

9. The system (101) according to any of the claims 1 to 7, the controller (103) being a smartphone.

10. The system (101) according to any of the claims 1 to 9, the module (102-c) being controlled also using physiological parameters of the user or preferences of the user.

11. The system (101) according to any of the claims 1 to 10, the first sensor (102-a) having a power consumption inferior to a power consumption of the second sensor (102-b).

12. An eyewear (EY) intended to be worn by a user, and comprising:
- a controller (103),
- a first sensor (102-a),
- a second sensor (102-b),
- a module (102-c),
the controller (103) being configured:
- to determine a situation of the user, using a model and first data received from the first sensor (102-a) and
- to determine a confidence level associated with the situation,
when the confidence level is below a threshold the controller being (103) also configured:
- to activate the second sensor (102-b) and
- to update the situation using second data received from the second sensor (102-b),
the controller being also configured:
- to control the module (102-c) according to the situation.

13. The eyewear (EY) according to the claim 12, the first sensor (102-a) having a power consumption inferior to a power consumption of the second sensor (102-b).

14. The eyewear (EY) according to the claim 12 or 13, the first sensor (102-a) being:
- a sensor to determine an acceleration, for example a inertial measurement unit,
- a sensor to determine an amount of a portion of light received by the optical device, for example an ambient light sensor or an ultraviolet sensor, or
- a sensor to determine a distance between the user and an object that the user is reading
and/or the second sensor (102-b) being:
- a sensor to capture a picture, for example a camera or
- a sensor to detect a gaze axis of the user, for example an eye tracker and/or the module (102-c) being:
- a variable-tint lens,
- a variable-power lens,
- a communication module configured to transmit information representing the situation,
- a light emitting device or
- a tactile actuator.

15. Method for controlling a module (102-c) of an optical device (102) intended to be worn by a user, the method comprising:
- a step of determining (201) a situation of the user, using a model and first data received from a first sensor (102-a) of the optical device (102),
- a step of determining (202) a confidence level associated with the situation, when the confidence level is below a threshold the method also comprising:
- a step of activating (203) a second sensor (102-b) of the optical device (102),
- a step of updating (204) the situation using second data received from the second sensor (102-b),
the method also comprising:
- a step of controlling (205) the module (102-c) according to the situation.
